Europäisches Patentamt

European Patent Office

Office européen des brevets

(19)

(11) **EP 1 274 143 A2**

(12) **EUROPÄISCHE PATENTANMELDUNG**

(43) Veröffentlichungstag:
08.01.2003 Patentblatt 2003/02

(51) Int Cl.$^{7}$: **H01M 8/04**

(21) Anmeldenummer: 02013035.7

(22) Anmeldetag: **13.06.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **04.07.2001 DE 10132346**

(71) Anmelder: **FORSCHUNGSZENTRUM JÜLICH GMBH**
**52425 Jülich (DE)**

(72) Erfinder: **Hoffmann, Hans, Jürgen**
**52428 Jülich (DE)**

(74) Vertreter: **Gille Hrabal Struck Neidlein Prop Roos Patentanwälte**
**Brucknerstrasse 20**
**40593 Düsseldorf (DE)**

(54) **Brennstoffzelle mit Begrenzereinrichtung für die Klemmenspannung**

(57)    Die Erfindung betrifft eine Brennstoffzelle, umfassend zwei Elektroden mit einer dazwischen befindlichen Elektrolytschicht. Wenigstens eine Elektrode weist einen Katalysator, so zum Beispiel Platin auf. Die Erfindung betrifft ferner ein Verfahren für den Betrieb der Brennstoffzelle.

Die Erfindung wird insbesondere dann angewendet, wenn in der Brennstoffzelle bei der Elektrode mit dem Katalysator einer basische Umgebung herrscht.

Aufgabe der Erfindung ist die Schaffung einer leistungsfähigen Brennstoffzelle der vorgenannten Art.

Erfindungsgemäß wird die Aufgabe durch eine Begrenzereinrichtung gelöst, die die Spannung begrenzt, die von einer Brennstoffzelle maximal bereitgestellt werden kann. Insbesondere kommt Begrenzereinrichtung in den Fällen zum Einsatz, bei denen eine Brennstoffzelle der eingangs genannten Art in basischer Umgebung betrieben wird.

Fig. 1

EP 1 274 143 A2

**Beschreibung**

Die Erfindung betrifft eine Brennstoffzelle, umfassend zwei Elektroden mit einer dazwischen befindlichen Elektrolytschicht. Wenigstens eine Elektrode weist einen Katalysator, so zum Beispiel Platin auf. Die Erfindung betrifft ferner ein Verfahren für den Betrieb der Brennstoffzelle.

Die Erfindung wird insbesondere dann angewendet, wenn in der Brennstoffzelle bei der Elektrode mit dem Katalysator einer basische Umgebung herrscht. Eine basische Umgebung tritt beispielsweise bei Direktmethanolbrennstoffzellen auf, die im Niedertemperaturbereich betrieben werden. Der Niedertemperaturbereich bezieht sich typischerweise auf Temperaturen um die 100°C, so zum Beispiel bei 80°C.

Im Niedertemperaturbereich werden typischerweise Polymermembranen als Elektroden verwendet, die mit Platin als Katalysator versehen sind. Dem Fachmann sind jedoch auch andere Katalysatormaterialien bekannt.

Eine basische Umgebung kann vorteilhaft sein, um zu guten Leistungswerten zu gelangen. Wird eine Direktmethanolbrennstoffzelle in basischer Umgebung betrieben, so wird jedoch bei Überschreiten eines Maximalwertes für die Klemmspannung der Brennstoffzelle das Katalysatormaterial, also insbesondere das Platin instabil und wird ausgeschieden. Der Betrieb der Brennstoffzelle wird so gefährdet.

Die Klemmenspannung ist die Spannung, die von der Brennstoffzelle bereitgestellt wird. In einer Brennstoffzelle wird Brennstoff und ein Oxidationsmittel in Strom bzw. eine Spannung umgesetzt. Die Klemmenspannung gibt also die so bereitgestellte Spannung wieder.

Aufgabe der Erfindung ist die Schaffung einer leistungsfähigen Brennstoffzelle der eingangs genannten Art.

Die Aufgabe der Erfindung wird durch eine Vorrichtung mit den Merkmalen des ersten Anspruchs gelöst. Vorteilhafte Ausgestaltungen ergeben sich aus den Unteransprüchen. Eine vorteilhaftes Verfahren für den Betrieb der Brennstoffzelle ergibt sich aus dem Nebenanspruch.

Erfindungsgemäß wird die Aufgabe durch eine Begrenzereinrichtung gelöst, die die Spannung begrenzt, die von einer Brennstoffzelle maximal bereitgestellt werden kann. Insbesondere kommt Begrenzereinrichtung in den Fällen zum Einsatz, bei denen eine Brennstoffzelle der eingangs genannten Art in basischer Umgebung betrieben wird. Es kommt bei der Begrenzereinrichtung darauf an, dass die bereitgestellte Klemmenspannung von vornherein begrenzt wird und nicht die bereits von der Brennstoffzelle bereitgestellte Klemmenspannung "nachträglich" auf einen vorgegebenen Maximalwert reduziert wird.

In einer vorteilhaften Ausgestaltung der Erfindung wird eine Begrenzereinrichtung bereitgestellt, die spannungsabhängig Strom verbraucht. Droht die Überschreitung des vorgegebenen Maximalwertes der Klemmenspannung, so bewirkt die Einrichtung, dass zusätzlich Strom sozusagen parasitär verbraucht wird.

Von einer Brennstoffzelle kann eine maximale Leistung bereitgestellt werden Die Leistung ergibt sich aus dem Produkt Strom multipliziert mit Spannung. Wird Strom verbraucht, so hat dies automatisch eine Spannungseinbuße zur Folge. Durch Verbrauch von Strom kann daher die von der Brennstoffzelle bereitgestellte Klemmenspannung geregelt werden.

Zu unterscheiden ist zwischen einem statischen und einem dynamischen Fall.

Es kann der Fall eintreten, dass der Verbraucher, der seinen Strom von der Brennstoffzelle bezieht, zum Beispiel konstant 80 mA Strom benötigt. Um den Maximalwert der Klemmenspannung nicht zu überschreiten, müsste jedoch bei einem angenommenen Beispielsfall 100 mA verbraucht werden. In diesem Fall ist die Begrenzereinrichtung so auszulegen, dass 20 mA verbraucht werden. Die gewünschte maximale Klemmenspannung wird so begrenzt und die nachteilhafte Abscheidung von Katalysatormaterial vermieden.

Vorteilhaft ist die Begrenzereinrichtung so ausgestaltet, dass sich der Verbrauch von Strom dynamisch an wechselnde Lasten anzupassen vermag. Benötigt beispielsweise der vorgenannte Verbraucher zunächst 30 mA, so verbraucht die Begrenzereinrichtung dann 70 mA. Steigt der Strombedarf beim Verbraucher an, so reduziert sich der Stromverbrauch bei der Begrenzereinrichtung entsprechend. Die Begrenzereinrichtung ist also hier so beschaffen, dass insgesamt konstant 100 mA verbraucht wird.

Der maximale Spannungswert kann zunächst durch Versuche ermittelt werden. Es kann dem Fachmann überlassen bleiben, für einen bestimmten Brennstoffzellentyp zum Beispiel anhand von Versuchen herauszufinden, welche Klemmenspannung nicht überschritten werden darf, damit das Katalysatormaterial nicht instabil und dann ausgeschieden wird. Entsprechend ist der gesamte Stromverbrauch auszulegen.

Die maximale Klemmenspannung kann auch abgeschätzt oder zumindest näherungsweise ausgerechnet werden. Der Fachmann ist anhand von Gleichgewichtsdiagrammen in der Lage, eine solche maximale Klemmenspannung zu berechnen. Derartige Gleichgewichtsdiagramme finden sich in einschlägigen Lehrbüchern.

In einer Ausgestaltung der Erfindung wird der durch die Begrenzereinrichtung abgezweigte Strom an einen Verbraucher weitergeleitet, der zeitunabhängig mit Strom versorgt werden kann. Ein Beispiel ist ein Elektrolyseur, bei dem mit Hilfe des überschüssigen Stroms Wasserstoff gewonnen wird. Der Wasserstoff kann dann wieder für den Betrieb der Brennstoffzelle eingesetzt werden. Alternativ kann beispielsweise eine konventionelle Batterie, so zum Beispiel eine Nikkel-Cadmium Batterie aufgeladen werden. Bei einer solchen Aufladung kommt es nicht darauf an, zu welchem Zeitpunkt aufgeladen wird. Solche Verbraucher sind also geeignet, um den parasitären Strom zu nutzen.

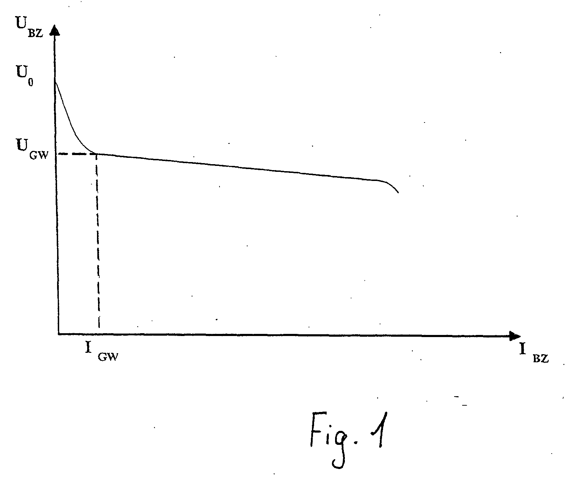

Ein Ausführungsbeispiel der Erfindung wird anhand der nachfolgenden Figuren 1 bis 4 näher erläutert.

Figur 1 zeigt die Brennstoffzellenspannung als Funktion des Zellenstromes mit und ohne Einfluss der Begrenzereinrichtung. Aufgetragen ist die von der Brennstoffzelle bereitgestellte Zellenspannung $U_{BZ}$ gegen den Stromverbrauch $I_{BZ}$. Ist keine Begrenzereinrichtung vorgesehen, so beträgt die Klemmenspannung $U_0$, wenn kein Strom verbraucht wird.

Wird die Begrenzereinrichtung verwendet, so beträgt die Zellenspannung maximal $U_{GW}$. $U_{GW}$ liegt unterhalb von $U_0$. Die Begrenzereinrichtung verbraucht Strom, sobald ein Grenzwert $I_{GW}$ des Stromes, der von einem Verbraucher benötigt wird, unterschritten wird. $U_{GW}$ ist die Spannung, deren Überschreitung die Abscheidung von Katalysatormaterial zur Folge hat.

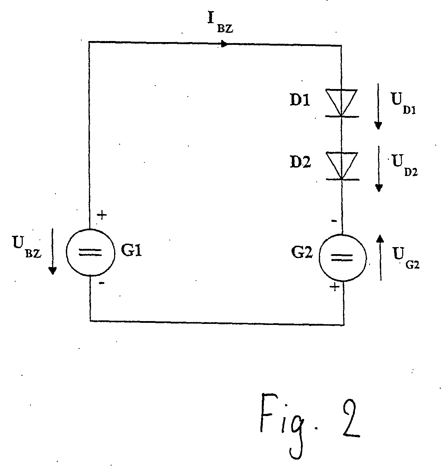

In einem ersten Ausführungsbeispiel gemäß Figur 2 stellt das Schaltzeichen G1 die Brennstoffzelle dar. Hierzu sind in Reihe zwei Dioden sowie ein Generator geschaltet. Die beiden Dioden D1, D2 und der Generator G2 sind in Serie geschaltet. Die Polarität von Generator G2 weist die gleiche Richtung der Polarität der Brennstoffzelle G1 auf. An den Dioden D1 und D2 fällt eine Spannung ab. Die Dioden sind so eingebaut, dass der Spannungsabfall an den Dioden der Polarität der Stromerzeuger entgegengerichtet ist. Die Schaltzeichen der Dioden sind im vorliegenden Fall mit D1 und D2 bezeichnet. Hier fällt die Spannung $U_{D1}$ sowie $U_{D2}$ ab.

In einer solchen Masche muss die Summe aller Spannungen gleich 0 sein. Es gilt somit:

$$U_{BZ} + U_{G2} - U_{D2} - U_{D1} = 0$$

Hieraus folgt:

$$U_{BZ} = U_{D1} + U_{D2} - U_{G2}$$

Ist nun $U_{D1} + U_{D2} > U_{BZ}$, so kann folglich mittels des Generators G2 die Klemmenspannung der Brennstoffzelle nach oben hin begrenzt werden.

In der Figur 2 symbolisiert $I_{BZ}$ den Belastungsstrom für die Brennstoffzelle. Das Ausführungsbeispiel gemäß Figur 2 ist lediglich für den statischen Anwendungsfall gedacht. Es weist darüber hinaus den Nachteil auf, dass eine Spannung durch einen externen Generator bereitgestellt werden muss.

Die Zahl der Dioden in einer solchen Schaltung ist so zu wählen, dass der Spannungsabfall an den Dioden größer als die erzeugbare Spannung $U_0$ der Brennstoffzelle ist. Im vorliegenden Fall sind zwei Dioden eingesetzt worden, um so zu zeigen, dass es sinnvoll sein kann, mehrere Dioden einzusetzen. Ist sichergestellt, dass der Spannungsabfall an einer Diode größer als die maximal erzeugbare Spannung $U_0$ der Brennstoffzelle ist, so genügt natürlich eine Diode.

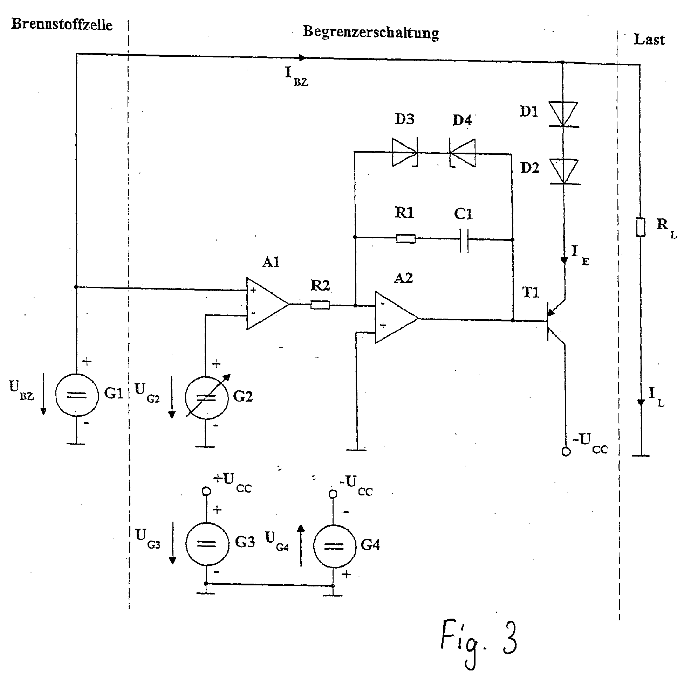

Figur 3 zeigt ein Ausführungsbeispiel für den dynamischen Einsatzfall.

In Figur 3 ist wiederum eine Brennstoffzelle G1, Dioden D1 und D2 sowie ein Generator G2 vorgesehen. Die mit dem Generator G2 bereitgestellte Spannung kann jedoch im Unterschied zum Fall gemäß Figur 2 individuell eingestellt werden.

In Figur 3 wird ein Laststrom $I_L$ angedeutet. Die Begrenzeinrichtung bzw. Begrenzerschaltung steuert den Stromverbrauch $I_E$. Der durch die Brennstoffzelle bereitgestellte Strom $I_{BZ}$ ist gleich der Summe von $I_E$ und $I_L$.

Die Brennstoffzellenspannung wird auf den nicht invertierenden Eingang eines Instrumentenverstärkers A1 geschaltet. Der Instrumentenverstärker ist ein konventionell erhältliches Bauelement, welches mehrere verschaltete Operationsverstärker aufweist. Der Instrumentenverstärker kann in Form eines integrierten Schaltkreises kommerziell erworben werden. An den invertierenden Eingang ist der Generator G2 angelegt. Der Instrumentenverstärker vergleicht nun die Spannung, die durch den Generator G2 bereitgestellt wird, mit der Spannung, die durch die Brennstoffzelle bereitgestellt wird. Die durch den Generator G2 vorgegebene Spannung wird auf den Wert $U_{GW}$ gemäß Figur 1 eingestellt. Der Ausgang des Instrumentenverstärkers ist mit dem Eingang eines sogenannten PI-Gliedes verbunden. Der Instrumentenverstärker dient also als Vergleichsstelle. Vergleichsstelle und PI-Glied bilden einen sogenannten PI-Regler. Der Instrumentenverstärker verbraucht praktisch keinen Strom, da er sehr hochohmig ist. Das PI-Glied steuert einen Stromverbrauch im Stellglied in Abhängigkeit von Polarität und Größe der Spannung, die am Ausgang vom Instrumentenverstärker A1 auftritt.

Dass Stellglied besteht aus zwei Dioden D1 und D2, einem pnp-Transistor T1 sowie einer Hilfsspannungsquelle $-U_{CC}$. In der Figur im oberen Bereich symbolisiert $-U_{CC}$ lediglich den Anschluss an den Generator G4, der weiter unten dargestellt ist.

Beim PI-Regler ist zu beachten, dass sich aufgrund der invertierenden Schaltung das Ausgangssignal des PI-Gliedes bei positiver Regelabweichung (Istwert > Führungsgröße) in negativer Richtung ändert und negative Werte annimmt. Dies ist erforderlich, um den pnp-Transistor T1 aussteuern zu können und damit einen entsprechenden Stromfluss über die beiden Dioden D1 und D2 zu ermöglichen. Durch die resultierende Erhöhung des Laststromes $I_{BZ}$ sinkt die Klemmenspannung der Brennstoffzelle $U_{BZ}$ ab.

Da es sich um einen Regler mit PI-Charakteristik handelt, wird die Regelabweichung vollständig ausgeregelt, das heißt der Regelvorgang dauert so lange, bis $U_{BZ} = U_{G2}$ ist. Bei einer negativen Regelabweichung nimmt das Ausgangssignal des Reglers positive Werte an, der Transistor T1 sperrt und verhindert damit einen Stromfluss über die Dioden D1 und D2 ($I_E = 0$). $U_{BZ}$ wird jetzt nicht durch die Begrenzereinrichtung beeinflusst. Eine Belastung der Brennstoffzelle durch einen externen Verbraucher ist jedoch jederzeit möglich. Im Regelkreis wirkt sich die Veränderung des Laststromes im Verbraucherzweig als Störgröße aus, da die Summe von $I_L$ und $I_E$ den gesamten Belastungsstrom $I_{BZ}$ für die Brennstoffzelle darstellt (siehe auch Gleichung $I_{BZ} = I_E + I_L$). Eine Erhöhung/Senkung von $I_L$ wirkt absenkend/erhöhend auf $U_{BZ}$. Diese Istwertveränderungen von $U_{BZ}$ bewirken im Regelkreis eine Anpassung des Anteils des parasitären Laststromes $I_E$, der über die Dioden D1 und D2 fließt. Die Begrenzereinrichtung passt dabei die Größe des Stromes $I_E$ stets den Lastverhältnissen der Brennstoffzelle - unter Beachtung des Mindestwertes von $I_{GW}$ - an und zwar für den vollen Belastungsbereich der Zelle.

$$I_L = 0 \quad => \quad I_E = I_{GW}$$

$$0 < I_L < I_{GW} \quad => \quad I_E = I_{GW} - I_L$$

$$I_L \geq I_{GW} \quad => \quad I_E = 0$$

Die Zenerdioden D3 und D4 im Gegenkopplungszweig des Integrators verhindern ein Aussteuern des Verstärkers A2 bis in die Sättigung, sowohl in positiver als auch in negativer Richtung. Die Auswahl dieser Dioden erfolgt derart, dass sich für negative Ausgangsspannungen ein größerer Aussteuerbereich - bis nahe an die negative Versorgungsspannung heran - ergibt, während im positiven Bereich nur ein geringer Aussteuerungsbereich realisiert wird. Diese Bereiche werden unsymmetrisch ausgelegt, da sie der Brennstoffzellenspannung angepasst sind, die nur positive Werte annehmen kann, und zur Aussteuerung des Transistors T1 eine negative Spannung erforderlich ist.

Ohne die Begrenzung der Ausgangsspannung würde das PI-Glied in die Sättigung geraten und es käme - speziell bei einer Annäherung des Wertes von $U_{BZ}$ an $U_{GW}$ - zu unerwünschten Verzögerungen im Regelverhalten.

Die Generatoren G3 und G4 bilden die bipolare Spannungsversorgung für die Begrenzereinrichtung.

Wie gezeigt, ist der Stromverbrauch $I_E = 0$, wenn $I_L \geq I_{GW}$ ist. Dies bedeutet, dass kein parasitärer Strom verbraucht wird, wenn der reguläre Verbraucher dafür Sorge trägt, dass die Spannung $U_{GW}$ nicht überschritten wird.

Es ist also möglich, die Begrenzereinrichtung gemäß Figur 3 quasi nur als Schutzmaßnahme vorzusehen. Wird darauf geachtet, dass hinreichend viel Strom verbraucht wird, so handelt es sich also lediglich um eine sogenannte Schutzschaltung für die Brennstoffzelle.

Natürlich sind Ausführungsformen denkbar, bei denen die Begrenzereinrichtung bzw. Begrenzereinrichtung nicht lediglich eine Schutzfunktion übernimmt, sondern tatsächlich auf parasitären Strom an einen zusätzlichen Verbraucher sinnvoll weiterleitet. Beispiele hierfür wurden bereits aufgeführt.

Bei der Auslegung der einzelnen Bauteile ist beispielsweise beim Transistor darauf zu achten, dass er den maximal möglichen Strom $I_E$ verkraften kann. Die Auslegung der einzelnen Bauelemente kann dem Fachmann überlassen bleiben.

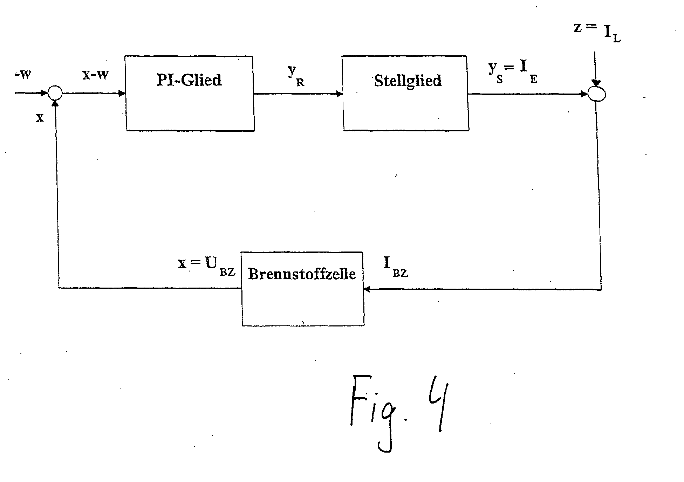

Figur 4 verdeutlicht die Verhältnisse, die bei der Schaltung gemäß Figur 3 auftreten.

**Patentansprüche**

1. Brennstoffzelle,

   - umfassend zwei Elektroden mit einer dazwischen befindlichen Elektrolytschicht,
   - wenigstens eine Elektrode weist einen Katalysator auf,

   **gekennzeichnet durch**
   eine Begrenzereinrichtung gelöst, die die Spannung zu begrenzen vermag, die von der Brennstoffzelle maximal bereitgestellt werden kann.

2. Brennstoffzelle nach Anspruch 1, bei der die Begrenzereinrichtung einen Stromverbrauch in Abhängigkeit von der Klemmenspannung der Brennstoffzelle derart steuert, dass die Überschreitung eines vorgegebenen Maximalwertes der Klemmenspannung vermieden wird.

3. Brennstoffzelle nach Anspruch 1 oder 2, bei der die Begrenzereinrichtung einen parasitären Stromverbrauch in Abhängigkeit vom Stromverbrauch eines Verbrauchers steuert.

4. Brennstoffzelle nach einem der vorhergehenden Ansprüche, bei der die Begrenzereinrichtung einen PI-Regler und ein Stellglied umfasst.

5. Brennstoffzelle nach einem der vorhergehenden Ansprüche, bei der der durch die Begrenzereinrichtung gesteuerte Strom einem weiteren Verbraucher zur Verfügung gestellt wird, der zeitunabhängig Strom zu verbrauchen vermag, wobei dieser weitere Verbraucher vorzugsweise ein Elektrolyseur ist.

6. Brennstoffzelle nach einem der vorhergehenden Ansprüche, bei der die Brennstoffzelle eine Direkt-Methanol-Brennstoffzelle ist.

**7.** Brennstoffzelle nach einem der vorhergehenden Ansprüche, bei der die Brennstoffzelle eine Niedertemperaturbrennstoffzelle ist.

**8.** Brennstoffzelle nach einem der vorhergehenden Ansprüche, bei der der Katalysator Platin umfasst.

**9.** Verfahren für den Betrieb einer Brennstoffzelle nach einem der vorhergehenden Ansprüche, bei der eine basische Atmosphäre bei der Elektrode mit dem Katalysator bereitgestellt wird.

Fig. 1

Fig. 2

Fig. 3

Fig. 4